# EUROPÄISCHE PATENTSCHRIFT

(11) **EP 3 292 390 B1**
(45) Veröffentlichungstag und Bekanntmachung des Hinweises auf die Patenterteilung: **19.06.2019**
(21) Anmeldenummer: 15749779.3
(22) Anmeldetag: 07.08.2015
(51) Int. Cl.: G01M 99/00

(54) **PRÜFEINRICHTUNG FÜR AUGENDUSCHEN**
TEST DEVICE FOR EYE SHOWERS
DISPOSITIF DE CONTRÔLE POUR RINCE-OEIL

(30) Priorität: 04.05.2015 DE 102015106857
(43) Veröffentlichungstag der Anmeldung: 14.03.2018
(73) Patentinhaber: Technische Hochschule Mittelhessen, 35390 Giessen (DE)
(72) Erfinder: PLATEN, Harald, 35423 Lich (DE)
(74) Vertreter: Stumpf, Peter
(86) Internationale Anmeldenummer: PCT/EP2015/068225
(87) Internationale Veröffentlichungsnummer: WO 2016/177434

(56) Entgegenhaltungen:
- CN-U- 204 293 491
- "EN 15154 - CEN TC 332", , 1. Juni 2009 (2009-06-01), XP055228386, Gefunden im Internet: URL:http://www.prevor.com/images/docs/de/n orm_en15154.pdf [gefunden am 2015-11-13]

## Beschreibung

Die vorliegende Erfindung betrifft eine Prüfeinrichtung zur sicherheitstechnischen Prüfung der Funktionsfähigkeit von installierten Augenduschen gemäß den Anforderungen aus Normen und Arbeitsschutzregeln (z.B. DIN EN 15154).

### Stand der Technik

Augenduschen sind technische Vorrichtungen, welche überwiegend zur Ersten Hilfe (Notdusche), beispielsweise in Laboratorien und Fertigungsbetrieben eingesetzt werden. Für viele Einsatzfelder sind Augenduschen sogar gesetzlich und/oder von Berufsgenossenschaften vorgeschrieben. Mit Hilfe der Augendusche können die Augen (und bei einigen Modellen auch das Gesicht) gespült werden, um Fremdkörper zu entfernen oder Kontaminationen zu verdünnen, bis ein Arzt zu Weiterbehandlung eingreifen kann. Sie wird vom Verletzten selbst oder von Dritten bedient. Man unterscheidet fest an das Trinkwassernetz angeschlossene Systeme und tragbare Einheiten (Augenspülflaschen) sowie Tanksysteme.

Die Schrift CN 204 293 491 offenbart beispielhaft eine solche Augendusche. Sie umfasst dazu ein Gefäß zur Aufnahme der Duschköpfe einer Augendusche und der von diesen Duschköpfen ausgehenden Spülfontäne, wobei das Gefäß parallel zu dieser Spülfontaine ausgerichtet ist, eine Wasserüberführung zur Aufnahme und zur Überführung des Wassers der Spülfontäne aus dem Gefäß und einen Behälter zur Aufnahme des Wassers der Spülfontäne aus der Wasserüberführung.

Bei den fest an das Trinkwassernetz angeschlossenen Systemen unterscheidet man solche, die über ein starres Rohr an die Trinkwasserleitung angeschlossen sind, von solchen, die über einen Schlauch mit der Trinkwasserleitung verbunden sind. Diese Schläuche sind im Übrigen besonders anfällig gegenüber mikrobielle Kontamination, was sowohl ein Gefährdungspotential für die Trinkwasserleitung als auch für den Anwender bedeutet.

Gerade Säuren und Laugen, auch nur in geringer Konzentration, können innerhalb kürzester Zeit durch die Hornhaut dringen und das Auge dauerhaft schädigen. Eine sofortige Erste Hilfe ist in diesem Fall zur Eindämmung der Schäden entscheidend. Auch das Eindringen von Fremdkörpern in das Auge, z.B. feiner Staub, stellt eine nicht unerhebliche Gefahr dar. Die technischen Anforderungen an diese Vorrichtungen werden in Normen beschrieben (z.B. DIN EN 15154 Teile 1 bis 4 und ANSI Z358.1-2014). Zur Gewährleistung der ordnungsgemäßen Funktion müssen die Augenduschen regelmäßig überprüft werden. Die einschlägige Norm DIN EN 15154 fordert von den Herstellern, dass diese mit der Augendusche sowohl Angaben zur Installation, Handhabung und Wartung, als auch zur Methode und Frequenz von Wartungsprüfungen liefern. Über die Normen und Sicherheitsvorschriften sind zwar die zu erfüllenden Anforderungen verfügbar, die einzuhalten sind (Volumenstrom, Strömungsverhalten nach Austritt aus der Düse, Temperatur, u.a.), aber in den Normen werden weder Prüfverfahren oder Prüfgeräte vorgegeben, mit denen die notwendigen Prüfungen durchgeführt werden können.

Der Volumenstrom sagt aus, wieviel Wasser durch die Augendusche fließt. Es handelt sich um eine Durchflussmenge.

Folgende Parameter müssen die Augenduschen gemäß der Norm DIN EN 15154 erfüllen. Augenduschen sollen einen Volumenstrom von mindestens je Duschkopf 6 Liter/Minute haben. Die Wasserabgabe muss dabei mindestens 15 Minuten gewährleistet sein. Die Spülfontänenhöhe darf dabei 100 mm nicht unterschreiten und 300 mm nicht überschreiten.

Die Spülfontänenhöhe ist die Höhe, die der von den Duschköpfen ausgehende Wasserstrahl erreicht bevor er zusammenbricht und das Wasser nach unten fällt. Diese Höhe ist ein Maß dafür mit wieviel Druck die Spülfontäne die Augen trifft.

Die Funktionsfähigkeit der Augenduschen muss regelmäßig getestet werden. So schreiben beispielsweise in Deutschland die Berufsgenossenschaften eine monatliche Messung der austretenden Wassermenge, eine Funktionsprobe sowie eine Besichtigung und Dokumentation vor. Häufig werden derartige Funktionsprüfungen in sehr einfacher Weise durchgeführt, indem ein Eimer unter die Augendusche gehalten wird, wenn diese betätigt wird. Auf diese Weise ist jedoch eine genaue Bestimmung der in einer bestimmten Zeit austretenden Wassermenge kaum möglich. Darüber hinaus sorgt die austretende Wassermenge häufig dafür, dass das Wasser herausspritzt. Dies ist auch deshalb problematisch, da das Beseitigen des Wassers Zeit kostet und in Laboratorien oft mit feuchtigkeitsempfindlichen Substanzen gearbeitet wird.

Diese Widrigkeiten führen dazu, dass die eigentlich vorgeschriebenen Funktionsprüfungen oftmals nur unzureichend, unregelmäßig oder gar nicht durchgeführt werden.

Bekannt sind Prüfeinrichtungen für Ganzkörpernotduschen z.B. aus DE 20 2009 016 338 U1. Diese sind für Augennotduschen nicht anwendbar, da diese keine Messung der Spülfontänenhöhe vorsehen.

### Aufgabe

Aufgabe der vorliegenden Erfindung ist es, die Nachteile des Standes der Technik zu umgehen und eine einfache Prüfeinrichtung für Augenduschen bereitzustellen, welche zu Messungen der normgemäßen Parameter insbesondere des Volumens des Spülwassers d.h. der Durchflussmenge durch die Augendusche und der maximalen Strahlhöhe des Spülwasserstrahls über den Duschköpfen d.h. Spülfontänenhöhe geeignet ist.

### Lösung der Aufgabe

Diese Ausgabe wird durch eine Prüfeinrichtung gemäß den in Anspruch 1 angegebenen Merkmalen, ein Prüfverfahren gemäß Anspruch 8 und eine Verwendung der Prüfeinrichtung gemäß Anspruch 9 gelöst. Vorteilhafte Ausführungsbeispiele werden im Folgenden beschrieben oder/und sind in den Unteransprüchen beschrieben. Die erfindungsgemäße Prüfeinrichtung 100, 200, 300 für Augenduschen umfasst ein Gefäß 9 zur Aufnahme der Duschköpfe 1 einer Augendusche und der von diesen Duschköpfen 1 ausgehenden Spülfontäne. Dabei ist das Gefäß 9 parallel zu dieser Spülfontäne ausgerichtet. Weiterhin umfasst die Prüfeinrichtung 100, 200, 300 eine Wasserüberführung 6 zur Aufnahme und zur Überführung des Wassers der Spülfontäne aus dem Gefäß 9. Die Prüfeinrichtung 100, 200 umfasst zusätzlich einen Behälter 5 zur Aufnahme des Wassers der Spülfontäne aus der Wasserüberführung 6 und eine Durchflussmengenmesseinheit 8 zur Messung des Volumens des Wassers der Spülfontäne. Das Gefäß 9 umfasst dabei eine optisch auswertbare Messeinheit 11,12,13 zur Messung der Spülfontänenhöhe.

Das Gefäß 9 ist bevorzugt vollständig um die Duschköpfe 1 der Augendusche herum angeordnet, damit kein Wasser austreten kann. Es ist nach oben hin wasserdicht abgeschlossen. Weiterhin ist es nach unten hin so ausbildet, dass es wasserdicht mit einem Auffangbecken 2 oder einem Haltering 26 für einen Auffangsack 27 verbindbar ist. Dazu weist es vorzugsweise wenigstens eine Dichtung 10 auf. Das Gefäß 9 besteht dabei bevorzugt aus transparentem bruchsicherem Material.

Für die Messung der Höhe der von den Duschköpfen 1 ausgehenden Spülfontäne umfasst das Gefäß 9 eine optisch auswertbare Messeinheit 11, 12, 13. Das sind im einfachsten Fall wenigstens drei Markierungen 11, 12,13, welche von außen sichtbar am Gefäß 9 angebracht sind.

Das Gefäß 9 ist für die Messung so angeordnet, dass sich die erste Markierung 11 auf Höhe der Duschköpfe 1 befindet. Die zweite Markierung 12 markiert die Mindesthöhe der Spülfontäne und befindet sich für eine normgerechte Messung 10 cm über der ersten Markierung 11 (bzw. 10,16 cm = 4 Inches entsprechend der ANSI-Norm). Die dritte Markierung 13 markiert die Maximalhöhe der Spülfontäne und befindet sich für eine normgerechte Messung 30 cm über der ersten Markierung 11 (bzw. 20,23 cm = 8 Inches entsprechend der ANSI-Norm). Alternativ zu Markierungen kann die optisch auswertbare Messeinheit auch andere geeignete optisch auswertbare Messmittel wie z.B. Lichtschranken umfassen.

Das Gefäß 9 ist weiterhin so ausgebildet, dass der Abstand zwischen der ersten Markierung 11 und der oberen Begrenzung des Gefäßes 9 wenigstens ca. 40 cm beträgt. Dies ist ausreichend, um sicher überprüfen zu können, ob die Spülfontäne die vorgeschriebene Maximalhöhe überschreitet. Für die Anpassung an eine andere oder geänderte Norm sind natürlich auch Markierungshöhen und die obere Begrenzung anzupassen.

Die Wasserüberführung 6 dient zur Überführung des Wassers, das von den Duschköpfen 1 der Augendusche versprüht wurde, in den Behälter 5. Sie besteht bevorzugt aus einem Rohr oder einem Schlauch.

Der Behälter 5 dient dazu das Wasser von der Wasserüberführung 6 aufzunehmen. Weiter kann der Behälter 5 zum Zweck einer Messung der Durchflussmenge und optional für weitere Untersuchungen verwendet werden.

Weiterhin umfasst der Behälter 5 die Durchflussmengenmesseinheit 8 bspw. in Form einer Füllstandsanzeige zur Bestimmung der eingeströmten Wassermenge. Alternativ umfasst die Wasserüberführung 6 die Durchflussmengenmesseinheit 8 oder eine weitere bspw. in Form einer integrierten Durchflussmengenmesseinheit 8. Die Wasserüberführung 6 kann aber auch unabhängig von einer zum Behälter 5 gehörenden Durchflussmengenmesseinheit 8 eine zusätzliche Durchflussmengenmesseinheit 8 umfassen.

Weiterhin umfasst die Prüfeinrichtung 100, 200, 300 zusätzlich eine Zeitmesseinheit. Die Durchflussmengenmesseinheit 8 (z.B. eine Füllstandsanzeige) ist, dabei mit dieser Zeitmesseinheit gekoppelt, so dass die Zeit, innerhalb der eine bestimmte Menge Wasser aufgefangen wird, nicht gesondert erfasst, sondern direkt mit gemessen wird. Dies stellt dann eine direkte Durchflussmessung dar.

In einer zweiten optionalen Weiterentwicklung umfasst die Prüfeinrichtung 100, 200, 300 noch eine Temperaturmesseinheit wie z.B. ein Thermometer zur Messung der Temperatur des Wassers der Spülfontäne. Gemäß der einschlägigen Normen ist eine Spüldauer von mindestens 15 Minuten vorgeschrieben, um die Schadstoffe möglichst rückstandslos zu beseitigen. Werden Haut und Augen über diesen Zeitraum zu kaltem Wasser (unter 15°C) oder zu heißem Wasser (über 37°C) ausgesetzt, kann dies zu einer Schädigung der Augen führen. Deshalb ist es sinnvoll, die Wassertemperatur zu überprüfen.

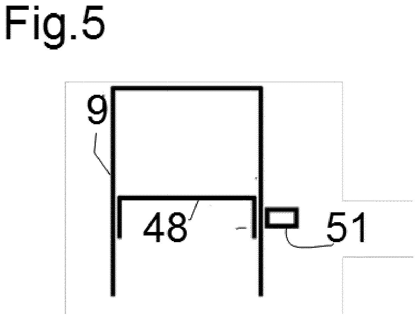

In einer dritten optionalen Weiterentwicklung umfasst die Prüfeinrichtung 100, 200, 300 eine Messplatte 48 innerhalb des Gefäßes 9, (siehe Fig.5). Die Höhe diese Messplatte 48 ist dabei bevorzugt über ein Verstellelement 51 z.B. einen Hebel einstellbar. Über die Messplatte 48 ist es möglich, eine optische Prüfung der Strahlform vorzunehmen. Die genauen Anforderungen für die Anwendung einer solchen Messplatte wie sie vor allem in den USA für die Überprüfung von Augennotduschen verwendet wird, ergeben sich aus der US-Norm ANSI/ISEA Z358.1-2014.

In einer vierten optionalen Weiterentwicklung der erfindungsgemäßen Prüfeinrichtung weist die Prüfeinrichtung 100, 200, 300 ein Fahrgestell 14 auf. Dieses dient zur Aufnahme und zum Transport des Behälters 5. Dazu weist das Fahrgestell 14 bevorzugt Rollen auf. Sobald die Überprüfung der Notdusche beendet ist, kann der Behälter 5 weggefahren und in der Nähe eines Ausgussbeckens oder Abflusses postiert und entleert werden.

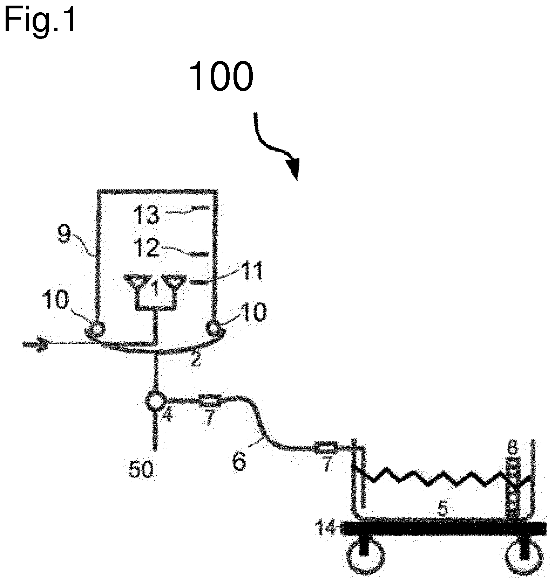

Die genannten vier optionalen Weiterentwicklungen können einzeln und in Kombination für die verschiedenen Ausführungsformen der Prüfeinrichtung 100, 200, 300 (siehe auch Fig. 1, Fig. 2 und Fig. 3) verwendet werden.

Der Behälter 5 der Prüfeinrichtung ist vorzugsweise zumindest abschnittsweise transparent. Ein transparenter Behälter weist den Vorteil auf, dass der Benutzer unmittelbar den Füllstand des Behälters sehen kann, um beispielsweise rechtzeitig die Wasserzufuhr stoppen zu können.

Der Behälter 5 ist dabei beispielsweise aus Polyvinylchlorid oder Acrylglas (Polymethylmethacrylat) gefertigt. Er kann dabei als offener oder geschlossener Behälter ausgeführt sein.

Der Behälters 5 umfasst optional noch eine Ablassvorrichtung, wie einen Ablasshahn oder eine Ablasspumpe. Die Ablassvorrichtung dient der einfachen Entleerung des Behälters 5.

Die Durchflussmengenmesseinheit 8 kann in Form einer Füllstandsanzeige als eine von außen ablesbare Skala an der Wand des Behälters 5 ausgebildet sein. Sie dient dazu, um festzustellen wie viel Wasser aufgefangen wurde. Sie kann dabei z.B. durch ein Maßband oder andere geeignete Messmittel z.B. durch magnetische, elektrische, oder andere Messmittel realisiert werden. Zur Feststellung der Menge des aufgefangenen Wassers sind weitere alternative Ausführungen der Durchflussmengenmesseinheit 8 möglich, beispielsweise andere von außen einsehbare Ableseeinheiten, die mit einem Schwimmer arbeiten. Ebenfalls möglich ist eine elektronische Erfassung des Durchflusses über eine Durchflussmengenmesseinheit 8 im Bereich der Wasserüberführung 6.

Das im Behälter 5 aufgefangene Wasser kann für weitere Kontrollen herangezogen werden, um beispielsweise die Wasserqualität zu beurteilen. Dies ist hilfreich um beispielsweise festzustellen, ob sich Algen gebildet haben oder das Wasser stark verfärbt ist. Letzteres ist häufig der Fall, da die Augenduschen, anders als andere Wasserleitungen, nicht regelmäßig benutzt werden.

Da Augenduschen den Vorschriften entsprechend recht hohe Wassermengen hervorbringen, sollte das Fassungsvermögen des Behälters 5 nicht zu klein bemessen sein, um ein Überlaufen zu vermeiden. Der Behälter 5 verfügt über eine ausreichende Größe, um eine ausreichende Wassermenge, die innerhalb einer bestimmten Zeiteinheit ausströmt, aufnehmen zu können ohne dass ein zwischenzeitliches Entleeren des Behälters notwendig ist. Zweckmäßigerweise weist daher der Behälter 5 ein Fassungsvermögen von mindestens 100 l bevorzugt 120 l auf. Dies ist bei einer Prüfzeit von 15 min und einem Wasserfluss von 6 Litern je Minute für Augenduschen mit einem Duschkopf ausreichend. Für Augenduschen mit zwei Duschköpfen ist das Fassungsvermögen natürlich idealerweise wenigstens doppelt so groß und beträgt mindestens 200 l, bevorzugt 240 l.

Die erfindungsgemäße Prüfeinrichtung für Augenduschen dient bevorzugt zur Messung des Wasserdurchflusses und/oder der Spülfontänenhöhe von Augenduschen. Dabei ist sie geeignet gemäß der Erfordernisse der einschlägigen Norm Augenduschen zu überprüfen.

Neben der Verwendung zur Überprüfung von Augenduschen ist die erfindungsgemäße Prüfeinrichtung zusätzlich geeignet, die Leitung der Augennotdusche zu spülen und das dabei anfallende Wasser aufzufangen. Daneben ist sie auch geeignet, Funktionsprüfungen durchzuführen, d.h. zu prüfen ob die Augendusche prinzipiell funktioniert.

Um die erfindungsgemäße Prüfeinrichtung zu realisieren gibt es zwei grundlegende Ausführungsformen. Diese nachfolgend beschriebenen Ausführungsformen stellen bevorzugte Ausführungsbeispiele der vorliegenden Erfindung dar. Die einzelnen optionalen Weiterentwicklungen lassen sich grundsätzlich mit beiden Ausführungsformen kombinieren.

Eine erste Ausführungsform der Prüfeinrichtung 100 ist besonders für Augenduschen, die ein Auffangbecken 2 für das ablaufende Wasser aufweisen, geeignet (siehe Fig.1).

Die Prüfeinrichtung umfasst in dieser ersten Ausführungsform zusätzlich ein Umlenkventil 4. Dieses Umlenkventil 4 befindet sich zwischen der Wasserzuführung 29 und den Duschköpfen 1 der Augendusche. Das Umlenkventil 4 ist dabei bspw. als 3-Wege-Hahn ausgeführt. Es ist dabei so ausgebildet, dass es einen Wasserstrom entweder zum Gefäß 9 oder zur Durchflussmengenmesseinheit 8 ermöglicht.

In einer ersten Stellung ist das Umlenkventil 4 so ausgerichtet, dass das Wasser, das von den Duschköpfen 1 versprüht wurde über eine Wasserüberführung 6 in den Behälter 5 fließen kann. Diese Einstellung des Umlenkventils 4 ermöglicht eine Durchflussmessung mit der Durchflussmengenmesseinheit 8.

In einer zweiten Stellung ist das Umlenkventil 4 so ausgerichtet, dass das Wasser, das von den Duschköpfen 1 versprüht wurde in den Abfluss 50 der Augendusche fließen kann. Das ist die Einstellung des Umlenkventils 4, wenn keine Messung erfolgt. Das Umlenkventil 4 kann zwischen den Messungen in der Anlage verbleiben.

Das Gefäß 9 ist hier direkt am Auffangbecken 2 befestigbar. Für eine wasserdichte Ausführung ist es empfehlenswert zwischen dem Gefäß 9 und dem Auffangbecken 2 eine umlaufende Dichtung 10 zu verwenden. Die Dichtung 10 kann zur Anpassung an das Auffangbecken 2 in spezifischen Formen ausgestaltet sein.

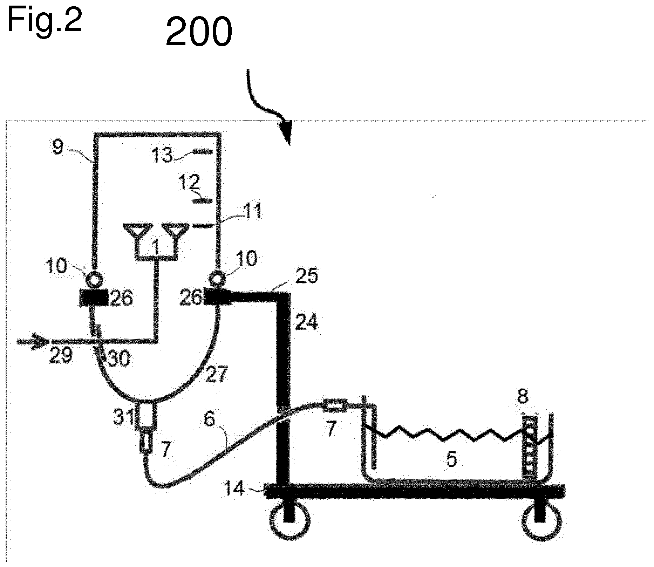

Eine zweite Ausführungsform der Prüfeinrichtung 200 ist besonders für Augenduschen, die kein Auffangbecken 2 für das ablaufende Wasser verfügen, geeignet. (Siehe Fig. 2)

Die Prüfeinrichtung umfasst in dieser Ausführungsform zusätzlich einen wasserdichten Auffangsack 27 aus einem geeigneten flexiblen Material, wie beispielsweise Neopren oder PVC. Dieser ist so ausgebildet, dass er zu Aufnahme von Wasser aus Gefäß 9 und zu Abgabe von Wasser an die Durchflussmengenmesseinheit 8, geeignet ist.

Der Auffangsack 27 ist direkt am Gefäß 9 befestigt. Das Gefäß 9 lässt sich dabei bevorzugt mittels einer Verschlusskonstruktion (beispielsweise mit Reißverschluss) - seitlich öffnen und so verschließen, dass die Wasserzuführung 29 zu den Duschköpfen der Augenduschen 1 dicht umschlossen wird. (Siehe Fig.2)

Weiterhin umfasst die Prüfeinrichtung in dieser Ausführungsform eine Haltevorrichtung 24 zum Halten des Gefäßes 9 und des Auffangsackes 27. Die Haltevorrichtung 24 ist bevorzugt über einem Haltering 26 an einem beweglichen Arm 25 der Haltevorrichtung 24 angebracht. Das Gefäß 9 lässt sich bevorzugt seitlich öffnen und so verschließen, dass die Wasserzuführung 29 zu den Duschköpfen der Augenduschen 1 dicht umschlossen wird. Dies kann bevorzugt mittels einer Verschlusskonstruktion (beispielsweise mit Reißverschluss) geschehen. Der Haltering 26 wird hierzu mit einem Scharnier versehen, womit die Breite der seitlichen Öffnung des Auffangsacks 27 angepasst werden kann. Am unteren Ende des Auffangsacks 27 befindet sich eine Tülle 31, an der die Wasserüberführung 6 in Form eines Schlauch oder eines Rohr anschließbar ist. Die Wasserüberführung 6 umfasst Befestigungen 7 wie z.B. Schnellkupplungen, zur Verbindung mit der Tülle 31. Die Wasserüberführung 6 dient der Überführung des Wassers aus dem Auffangsack 27 in den Behälter 5.

Über eine Durchflussmengenmesseinheit 8 z.B. eine Füllstandsanzeige ist das Volumen des eingeflossenen Wassers feststellbar. Die Durchflussmengenmesseinheit 8 kann z.B. ein Maßband oder ein vergleichbares geeignete Messmittel sein.

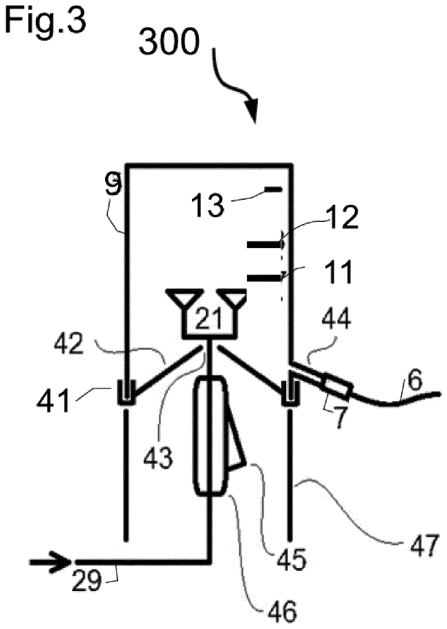

In einer dritten Ausführungsform 300 der erfindungsgemäßen Prüfeinrichtung für Augenduschen (Fig. 3) umfasst diese einen mit dem Gefäß 9 verbundenen Auslaufstutzen 44 mit einer Befestigung 7 für die Wasserüberführung 6. An die bei der Messung nach unten weisende Öffnung des Gefäßes 9 ist eine Manschette 42 angebracht. Die Manschette 42 dient dazu, dass das Wasser der Spülfontäne vollständig in die Wasserüberführung 6 gelangt. Diese ist optimalerweise trichterförmig und flexibel ausgebildet. Die Manschettenöffnung 43 der Manschette 42 ist so geformt, dass sie in das Innere des Gefäßes 9 hineinragt. Weiterhin ist sie bevorzugt über eine Dichteinfassung 41 am Gefäß 9 befestigbar. Das Gefäß 9 ist alternativ an einer Haltevorrichtung 47 angebracht. Die Haltevorrichtung 47 verfügt über mindestens eine seitliche Öffnung, die so ausgebildet ist, dass mit einer Hand in das Gefäß 9 hineingefasst werden kann.

Diese Ausführungsform 300 der erfindungsgemäßen Prüfeinrichtung für Augenduschen der erfindungsgemäßen Prüfeinrichtung für Augenduschen ist besonders für Augenduschen geeignet die keine fest positionierten Duschköpfe 1 sondern bewegliche Duschköpfe 1 aufweisen.

In einer Weiterbildung der oben beschriebenen Prüfeinrichtung 300 umfasst diese eine Haltevorrichtung 47. Die Haltevorrichtung 47 besteht aus einer rohrförmigen Konstruktion, auf die das Gefäß 9 mit der Manschette 42 aufgebracht wird, und verfügt bevorzugt über eine Öffnung, durch die mit einer Hand durchgefasst werden kann, um beispielsweise den Schalter 45 zu betätigen.

Diese dient dazu die Prüfvorrichtung 300 zumindest teilweise auf einer Unterlage wie einen Tisch abstellen zu können. So kann durch die Haltevorrichtung 47 die Prüfung der Augendusche durchgeführt werden, ohne dass man die ganze Anordnung in der Hand halten muss.

In einer Weiterbildung der erfindungsgemäßen Prüfeinrichtung 100, 200, 300 für Augenduschen wird eine horizontal bewegliche Messplatte zur Prüfung der Form des Sprühstrahls im Auffanggefäß angebracht wird. Die Anforderung nach der Anwendung einer solchen Messplatte ergibt sich aus ANSI/ISEA Z358.1-2014. Die Messplatte besitzt demnach Markierungen, wo das Gebiet zwischen diesen Markierungen bei der Messung in einer bestimmten Höhe von der Spülfontäne gespült wird. Die Augendusche gilt als funktionstüchtig, wenn die Spülfontäne diese Markierungen erreicht.

Das Prüfverfahren mit der Prüfeinrichtung gemäß der ersten Ausführungsform erfolgt folgendermaßen:
Zur Durchführung der Prüfung wird zunächst das Gefäß 9 über die Duschköpfe 1 der Augendusche gestülpt, so dass das Gefäß 9 über eine Dichtung 10 mit dem Auffangbecken 2 abschließt. Anschließend wird, sofern es sich nicht dauerhaft dort befindet, das Umlenkventil 4 zwischen das Auffangbecken 2 und den Abfluss 50 installiert. Wenn die Prüfung häufig erfolgt, kann es dort zwischen den Messungen verbleiben. Im Anschluss wird die Wasserüberführung 6 an das Umlenkventil 4 angeschlossen. Jetzt wird das Umlenkventil 4 so eingestellt, dass das ablaufende Wasser für den Zeitraum der Prüfung nicht in den Abfluss 50, sondern zum Behälter 5, der Bestandteil der Prüfeinrichtung ist, fließt. Im nächsten Schritt wird die Augendusche aktiviert.

Jetzt fließt Wasser über die Wasserzuführung 29 in die Duschköpfe 1. Dabei bildet sich eine Spülfontäne innerhalb des Gefäßes 9. Diese bricht in einer gewissen Höhe zusammen. Diese Höhe ist die Spülfontänenhöhe. Diese wird über eine optisch auswertbare Messeinheit 11, 12,13 gemessen. Das Wasser fließt anschließend über das Auffangbecken 2 und das Umlenkventil 4 und die Wasserüberführung 6.

Während der Prüfung läuft das Wasser bei entsprechend umgestelltem Umlenkventil 4 über eine Wasserüberführung 6 (z.B. einen angebrachten Schlauch oder eine Verrohrung), in den Behälter 5 z.B. einen Auffangtank. Der Durchfluss wird dabei entweder in einer zeitabhängigen Messung durch das in den Behälter 5 einströmende Wasser oder durch eine direkt in der Wasserüberführung 6 implementierte Durchflussmengenmesseinheit 8 bestimmt.

Das Prüfverfahren mit der Prüfeinrichtung gemäß der zweiten Ausführungsform erfolgt folgendermaßen:
Zur Durchführung der Prüfung wird zunächst das Gefäß 9 über die Duschköpfe 1 der Augendusche gestülpt, so dass dieses Gefäß 9 über eine Dichtung 10 mit dem Haltering 26 abschließt. Dann wird um die Wasserzuführung 29 eine weitere Dichtung 30 z.B. in Form einer Dichtscheibe gelegt. Am unteren Ende des Auffangsacks 27 befindet sich eine Tülle 31, an der die Wasserüberführung 6 in Form eines Schlauch oder eines Rohr angeschlossen wird. Die Wasserüberführung 6 umfasst eine Befestigung 7 wie z.B. Schnellkupplung, zur Verbindung mit der Tülle 31 und dem Behälter 5. Diese Befestigung 7 wird jetzt arretiert. Die Wasserüberführung 6 dient der Überführung des Wassers aus dem Auffangsack 27 in den Behälter 5. Im nächsten Schritt wird die Augendusche aktiviert. Dann fließt Wasser über die Wasserzuführung 29 in die Duschköpfe 1. Dabei bildet sich eine Spülfontäne innerhalb des Gefäßes 9. Die Spülfontäne bricht in einer gewissen Höhe zusammen. Diese Höhe ist die Spülfontänenhöhe. Diese wird über eine optisch auswertbare Messeinheit 11,12,13 gemessen. Das Wasser fließt anschließend über den Auffangsack 27 und die an diesem befestigte Wasserüberführung 6 in den Behälter 5. Der Durchfluss wird dabei entweder in einer zeitabhängigen Messung durch das in den Behälter 5 einströmende Wasser oder durch eine direkt in der Wasserüberführung 6 implementierte Durchflussmengenmesseinheit 8 bestimmt.

Das Prüfverfahren mit der Prüfeinrichtung 300 gemäß der dritten Ausführungsform erfolgt folgendermaßen:
Zur Durchführung der Prüfung wird die Handaugennotdusche an ihrem Haltegriff 46 gefasst und der Duschkopfl durch die Manschettenöffnung 43 der flexiblen Manschette 42 geschoben. Aufgrund ihres flexiblen Materials und ihrer Konstruktionseigenschaften legt sich die Manschette so eng um die Augennotdusche, dass bei der Prüfung kein Wasser an der Kontaktstelle austreten kann. Der Duschkopf 1 wird so eingestellt, dass die Sprühstrahlhöhe mittels einer optisch auswertbaren Messeinheit 11,12,13 bestimmt werden kann. Durch Betätigen des Schalters 45 wird der Sprühstrahl ausgelöst. Seine Sprühhöhe wird dabei optisch auswertbare Messeinheit 11, 12, 13 bestimmt. Das Wasser sammelt sich im Raum zwischen Manschette 42 und Wandung des Gefäßes 9 und wird über den Auslaufstutzen 44 und die daran befindliche Befestigung 7 über eine angeschlossene Wasserüberführung 6 aus dem Inneren des Gefäßes 9 abgeleitet. Das abgeleitete Wasser kann entweder direkt dem Abfluss 50 eines in der Nähe befindlichen Waschbeckens oder einem Bodeneinlauf zugeleitet werden, oder in einem Behälter 5 aufgefangen werden. Alternativ oder ergänzend wird die Durchflussmenge über eine Durchflussmengenmesseinheit 8 bestimmt.

Es ist möglich die Prüfeinrichtung 100, 200, 300 für Augenduschen an eine Prüfeinrichtung für Ganzkörpernotduschen 60 anzuschließen. So können Augendusche und Ganzkörpernotduschen gleichzeitig geprüft werden, was den Zeitaufwand verringert.

Die Zeiterfassung kann bei allen Ausführungsformen über eine optional implementierte Zeiterfassungseinheit erfolgen.

In sämtlichen Verfahren ist es möglich während der Messung des Durchflusses über die optionale Temperaturmesseinheit wie z.B. ein Thermometer, die Wassertemperatur zu überwachen.

Weiterhin sind weitere Kontrollen während oder nach der Durchführung des Messverfahrens möglich z.B. eine Sichtprüfung des Spülwassers im Behälter 5 oder eine Wasserentnahme aus Behälter 5 für eine mikrobielle Prüfung.

Die Ausführungsbeispiele der vorliegenden Erfindung werden auch anhand der beigefügten Zeichnungen näher erläutert.
Figur 1 zeigt eine besonders für Augenduschen, die über ein Auffangbecken 2 für das ablaufende Wasser verfügen, geeignete erste Ausführungsform der Prüfeinrichtung 100.
Figur 2 zeigt eine besonders für Augenduschen, die über kein Auffangbecken 2 für das ablaufende Wasser verfügen, geeignete zweite Ausführungsform der Prüfeinrichtung 200.
Figur 3 zeigt die zweiteilige Ausführung der Prüfeinrichtung 300 in Behälter 5 und der Haltevorrichtung 47. Diese Ausführungsform einer Prüfeinrichtung ist besonders geeignet anzuwenden für Augennotduschen die an einen Schlauch angeschlossenen sind.

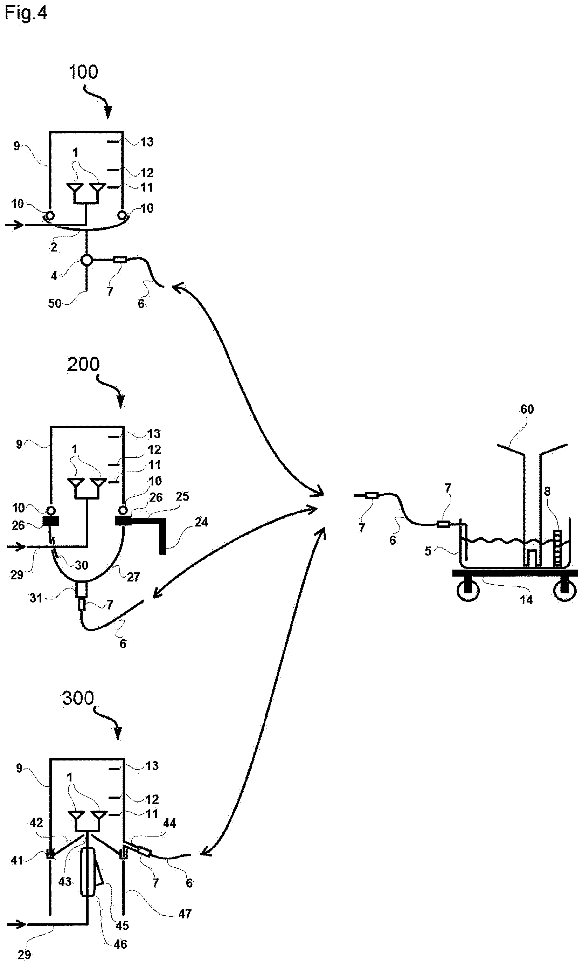

Figur 4 zeigt die Kombination der verschiedenen Ausführungsformen 100,200,300 der Prüfeinrichtungen für Augennotduschen mit der für Ganzkörpernotduschen.
Figur 5 zeigt das Schema, wie eine horizontal bewegliche Messplatte zur Prüfung der Form des Sprühstrahls im Gefäß 9 angebracht wird.

Augenduschen weisen üblicherweise zwei Duschköpfe auf. Im vorausgegangenen Abschnitt wurde stets von Duschköpfen in der Mehrzahl gesprochen. Es ist dem Fachmann aber klar, dass die beschriebene Vorrichtung auch auf Augenduschen mit nur einem Duschkopf anwendbar ist. Die Messung erfolgt bei diesen Anlagen genauso wie bei Anlagen mit zwei Duschköpfen.

### Bezugszeichenliste:

100, 200, 300 Prüfeinrichtung
1 Duschköpfe der Augendusche
2 Auffangbecken
4 Umlenkventil
5 Behälter
6 Wasserüberführung
7 Befestigung
8 Durchflussmengenmesseinheit
9 Gefäß
10, 30 Dichtung
11, 12,13 optisch auswertbare Messeinheit
14 Fahrgestell
24 Haltevorrichtung
25 bewegliche Arm
26 Haltering
27 Auffangsack
29 Wasserzuführung
31 Tülle
41 Dichteinfassung
42 Manschette
43 Manschettenöffnung
44 Auslaufstutzen
45 Schalter
46 Haltegriff
47 Haltevorrichtung
48 Messplatte
50 Abfluss
51 Verstellelement
60 Vorrichtung zur Prüfung von Ganzkörpernotduschen
61 Auffangtrichter

## Patentansprüche

1. Prüfeinrichtung (100, 200, 300) für Augenduschen, **gekennzeichnet durch**
- ein Gefäß (9) zur Aufnahme der Duschköpfe (1) einer Augendusche und der von diesen Duschköpfen (1) ausgehenden Spülfontäne, wobei das Gefäß (9) parallel zu dieser Spülfontaine ausgerichtet ist,
- eine Wasserüberführung (6) zur Aufnahme und zur Überführung des Wassers der Spülfontäne aus dem Gefäß (9),
- einen Behälter (5) zur Aufnahme des Wassers der Spülfontäne aus der Wasserüberführung (6),
- eine Durchflussmengenmesseinheit (8) zur Messung des Volumens des Wassers der Spülfontäne
- eine Zeitmesseinheit zur Messung der Durchflussmenge des Wassers der Spülfontäne in einem Zeitintervall
wobei das Gefäß (9) eine optisch auswertbare Messeinheit (11, 12, 13) zur Messung der Spülfontänenhöhe aufweist.

2. Prüfeinrichtung (100, 200, 300) für Augenduschen gemäß Anspruch 1, **dadurch gekennzeichnet dass** diese eine Temperaturmessvorrichtung zur Bestimmung der Temperatur des Wassers der Spülfontäne aufweist.

3. Prüfeinrichtung (100, 200, 300) für Augenduschen gemäß einem der Ansprüche 1 oder 2 , **dadurch gekennzeichnet, dass** diese ein Fahrgestell (14) zur Aufnahme und Transport des Behälter (5) aufweist.

4. Prüfeinrichtung (100) für Augenduschen gemäß einem der Ansprüche 1 bis 3, **dadurch gekennzeichnet, dass** diese ein Umlenkventil (4) zwischen dem Gefäß (9) und der Wasserüberführung (6) aufweist.

5. Prüfeinrichtung (200) für Augenduschen gemäß einem der Ansprüche 1 bis 3, **dadurch gekennzeichnet, dass** diese einen wasserdichten Auffangsack (27), zum vollständigen Auffangen des Wassers aufweist, der zwischen dem Gefäß (9) und der Wasserüberführung (6), angeordnet ist.

6. Prüfeinrichtung (300) für Augenduschen gemäß einem der Ansprüche 1 bis 3, **dadurch gekennzeichnet, dass** diese eine Manschette (42) aufweist, welche am Gefäß (9) angebracht ist, sodass das Wasser der Spülfontäne vollständig in die Wasserüberführung (6) gelangt.

7. Prüfeinrichtung (300) für Augenduschen gemäß Anspruch 6, **dadurch gekennzeichnet, dass** diese eine Haltevorrichtung (47) am Gefäß (9) zum Abstellen der Prüfvorrichtung (300) auf einer Unterlage aufweist.

8. Verfahren zur Messung der Durchflussmenge und der Spülfontänenhöhe, **dadurch gekennzeichnet, dass** es mit einer Prüfeinrichtung (100, 200, 300) gemäß einem der Ansprüche 1 bis 7 durchgeführt wird.

9. Verwendung einer Prüfeinrichtung (100, 200, 300) für Augenduschen gemäß einem der Ansprüche 1 bis 7 zur Messung der Durchflussmenge und/oder der Spülfontänenhöhe.

## Claims

1. Testing device (100, 200, 300) for eye showers, **characterized by**
- a vessel (9) for receiving the shower heads (1) of an eye shower and the flushing fountain emanating from these shower heads (1), the vessel (9) being aligned parallel to this flushing fountain,
- a water transfer (6) for receiving and transferring the water from the flushing fountain from the vessel (9),
- a container (5) for receiving the water of the flushing fountain from the water transfer (6),
- a flow measuring unit (8) for measuring the volume of water in the flushing fountain
- a time measuring unit for measuring the flow rate of the flushing fountain water in a time interval,
whereby the vessel (9) having an optically evaluable measuring unit (11, 12, 13) for measuring the flushing fountain height.

2. Testing device (100, 200, 300) for eye showers according to claim 1 or 2, **characterized in that** it has a temperature measuring device for determining the temperature of the water of the flushing fountain.

3. Testing device (100, 200, 300) for eye showers according with one of claims 1 or 2, **characterized in that** it comprises a chassis (14) for receiving and transporting the container (5).

4. Testing device (100) for eye showers in accordance with one of claims 1 to 3, **characterized in that** it has a deflection valve (4) between the vessel (9) and the water transfer (6).

5. Testing device (200) for eye showers according to one of claims 1 to 3, **characterized in that** it comprises a watertight collection bag (27) disposed between the vessel (9) and the water transfer (6) for the complete collection of the water.

6. Testing device (300) for eye showers according to one of claims 1 to 3, **characterized in that** it comprises a sleeve (42) which is attached to the vessel (9) so that the water of the flashing fountain passes completely into the water transfer (6).

7. Testing device (300) for eye showers according to claim 6, **characterized in that** it has a holding device (47) on the vessel (9) for placing the testing device (300) on a support.

8. Method for measuring the flow rate and the flushing fountain height, **characterized in that** it is carried out with a testing device (100, 200, 300) in accordance with one of claims 1 to 7.

9. Usage of a testing device (100, 200, 300) for eye showers according to any of claims 1 to 7 for measuring the flow rate and/or the flushing fountain height.

## Revendications

1. Dispositif d'essai (100, 200, 300) pour douches oculaires, **caractérisé par**
- un récipient (9) destiné à recevoir les pommes de douche (1) d'une douche oculaire et la fontaine de rinçage émanant de ces pommes de douche (1), le récipient (9) étant aligné parallèlement à cette fontaine de rinçage,
- un transfert d'eau (6) pour recevoir et transférer l'eau de la fontaine de rinçage du récipient (9),
- un réservoir (5) pour recevoir l'eau de la fontaine de rinçage du transfert d'eau (6),
- une unité de mesure de débit (8) pour mesurer le volume d'eau dans la fontaine de rinçage
- une unité de mesure du temps pour mesurer le débit de l'eau de la fontaine de rinçage dans un intervalle de temps donné,
à condition que le récipient (9) ayant une unité de mesure optiquement exploitable (11, 12, 13) pour mesurer la hauteur de la fontaine de chasse d'eau.

2. Dispositif d'essai (100, 200, 300) pour douches oculaires selon la revendication 1, **caractérisé en ce qu'**il comporte un dispositif de mesure de température pour déterminer la température de l'eau de la fontaine de rinçage.

3. Dispositif d'essai (100, 200, 300) pour douches oculaires selon l'une des revendications 1 ou 2, **caractérisé en ce qu'**il comprend un châssis (14) pour recevoir et transporter le réservoir (5).

4. Dispositif d'essai (100, 200, 300) pour douches oculaires selon l'une des revendications 1 à 3, **caractérisé en ce qu'**il comporte une soupape de déviation (4) entre le récipient (9) et le transfert d'eau (6).

5. Dispositif d'essai de douche oculaire (200) selon l'une des revendications 1 à 3, **caractérisé en ce qu'**il comprend un sac collecteur étanche (27) disposée entre le récipient (9) et le transfert d'eau (6) pour la collecte complète de l'eau.

6. Dispositif d'essai (300) pour douches oculaires selon l'une des revendications 1 à 3, **caractérisé en ce qu'**il comprend un manchon (42) qui est fixé au récipient (9) de sorte que l'eau de la fontaine de rinçage passe complètement dans le transfert d'eau (6).

7. Dispositif d'essai (300) pour douches oculaires selon la revendication 6, **caractérisé en ce qu'**il comporte un dispositif de maintien (47) sur le récipient (9) pour placer le dispositif d'essai (300) sur un support.

8. Procédure de mesure du débit et de la hauteur de la fontaine de rinçage, **caractérisé en ce qu'**il est réalisé avec un dispositif d'essai (100, 200, 300) selon l'une des revendications 1 à 7.

9. Utilisation d'un dispositif d'essai (100, 200, 300) pour douches oculaires selon l'une quelconque des revendications 1 à 7 pour mesurer le débit et/ou la hauteur de la fontaine de rinçage.
